(19) **Europäisches Patentamt · European Patent Office · Office européen des brevets**

(11) **EP 4 742 417 A1**

(12) # EUROPEAN PATENT APPLICATION

(43) Date of publication:
**13.05.2026 Bulletin 2026/20**

(21) Application number: **25212615.6**

(22) Date of filing: **31.10.2025**

(51) International Patent Classification (IPC):
**H01M 50/449** (2021.01)  **H01M 50/403** (2021.01)
**H01M 50/42** (2021.01)  **H01M 50/423** (2021.01)
**H01M 50/429** (2021.01)  **H01M 50/431** (2021.01)
**H01M 50/443** (2021.01)  **H01M 50/446** (2021.01)
**H01M 50/46** (2021.01)  **H01M 50/489** (2021.01)

(52) Cooperative Patent Classification (CPC):
**H01M 50/403; H01M 50/42; H01M 50/423;
H01M 50/4295; H01M 50/431; H01M 50/443;
H01M 50/446; H01M 50/449; H01M 50/461;
H01M 50/489; Y02E 60/10**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **07.11.2024 KR 20240156960
13.08.2025 KR 20250111981**

(71) Applicants:
• **SK Innovation Co., Ltd.
Seoul 03188 (KR)**
• **SK IE Technology Co., Ltd.
Seoul 03161 (KR)**

(72) Inventors:
• **KIM, Dong Jae
34124 Daejeon (KR)**
• **YUN, Cheol Min
34124 Daejeon (KR)**
• **LEE, Soon Bo
34124 Daejeon (KR)**

(74) Representative: **Prüfer & Partner mbB
Patentanwälte · Rechtsanwälte
Sohnckestraße 12
81479 München (DE)**

(54) **COMPOSITE SEPARATOR AND ELECTROCHEMICAL DEVICE INCLUDING THE SAME**

(57)     Provided is a composite separator including: a porous substrate; and a coating layer which is formed on at least one surface of the substrate and includes organic particles, wherein the coating layer satisfies the following Equation 1, and the composite separator may secure excellent heat resistance, adhesive strength, and fusion strength with an electrode even at a small thickness and prevent a blocking phenomenon:

[Equation 1]

$$4{,}000 \le (A \times D^2)/T \le 5{,}500$$

wherein A, D, and T are as defined in the specification.

**EP 4 742 417 A1**

FIG. 1

**Description**

**TECHNICAL FIELD**

The following disclosure relates to a separator and an electrochemical device including the same.

**BACKGROUND**

In recent years, as an electrochemical device has gradually developed a higher capacity and higher output, there is a growing demand for securing heat resistance and safety. In particular, performance required for a separator which acts as a very important factor in securing heat resistance and safety of an electrochemical device is being advanced, and, for example, a composite separator in which an inorganic coating layer including inorganic particles such as alumina ($Al_2O_3$), silica ($SiO_2$), and zirconia ($ZrO_2$) and a binder is introduced onto a porous substrate has been established as an important technology.

However, since a conventional composite separator often shows insufficient adhesion to an electrode, the separator and the electrode are separated during a cell assembly process which can lead to distortion, deformation, crack or pinhole formation and/or delamination of an electrode assembly and, in turn, may cause short circuits between electrodes, ultimately resulting in a safety issue. To address these issues, a concept based on an introduction of a coating layer including a separate fusing agent, which may exert fusion strength with an electrode, has been suggested. Yet, the fusion effect may not be sufficient and, even if sufficient fusion strength can be implemented, issues related to e.g. a blocking phenomenon, in which the fusing agent and a material in the coating layer are desorbed, may still occur.

[Related Art Documents]

[Patent Document]

(Patent Document 1) KR 10-2573567B1 (August 29, 2023)

**SUMMARY**

An embodiment of the present invention is directed to providing a composite separator to which a coating layer including organic particles to implement fusion strength with an electrode is introduced, and the composite separator may secure excellent heat resistance, adhesive strength, and fusion strength with an electrode even at a small thickness and may prevent a blocking phenomenon.

Another embodiment of the present invention is directed to providing an electrochemical device employing the composite separator.

In one general aspect, a composite separator includes: a porous substrate; and a coating layer which is formed on at least one surface of the substrate and includes organic particles, wherein the coating layer satisfies the following Equation 1:

$$[Equation\ 1]$$

$$4,000 \le (A \times D^2)/T \le 5,500$$

wherein

A is the number of the organic particles per unit area ($/mm^2$) on a surface of the coating layer;
D is an average particle diameter ($\mu m$) of the organic particles observed on the surface of the coating layer; and
T is a total thickness ($\mu m$) of the coating layer.

The average particle diameter (D) of the organic particles on the surface of the coating layer may be 1 $\mu m$ to 10 $\mu m$.

The total thickness of the coating layer may be 0.1 $\mu m$ to 20 $\mu m$, preferably 1 $\mu m$ to 10 $\mu m$, more preferably 1 $\mu m$ to 5 $\mu m$, and even more preferably more than 1 $\mu m$ and less than 5 $\mu m$.

The organic particles may have a glass transition temperature ($T_g$) of 40°C to 80°C.

The organic particles may include one or two or more selected from the group consisting of acryl-based polymers, urethane-based polymers, and fluorine-based polymers.

The acryl-based polymer may include a copolymer including an alkyl (meth)acrylate-based monomer polymerization unit; and one or two or more polymerization units selected from a styrene-based monomer polymerization unit, a butadiene-based monomer polymerization unit, and a vinyl-based monomer polymerization unit.

The coating layer may further include inorganic particles and a binder.

The inorganic particles may be included at 96 to 99 wt% with respect to the total weight of the coating layer. In this specific content range, increased adhesive strength between the inorganic particles in the coating layer as well as the adhesive strength between the interfaces of the substrate and the coating layer may be achieved, while heat shrinkage may be significantly reduced.

The binder and the organic particles may be included at a weight ratio of 5:5 to 7:3.

The organic particles may be included at more than 1 wt% and 2 wt% or less with respect to the total weight of the coating layer. A content in this range may lead to improved fusion strength.

The inorganic particles may have an equivalent spherical diameter (Dv50) of 0.01 $\mu$m to 1 $\mu$m.

The inorganic particles may include one or two or more selected from the group consisting of boehmite, pseudo-boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

The binder may be one or two or more selected from (meth)acryl-based polymers, fluorine-based polymers, styrene-based polymers, vinyl alcohol-based polymers, vinyl ester-based polymers, vinylpyrrolidone-based polymers, cellulose-based polymers, polyimide-based polymers, polyamide-based polymers, and polyalkylene glycol.

The binder may include polyacrylamide and/or carboxymethyl cellulose. A combination thereof may lead to particularly enhanced air permeability.

The binder may include carboxymethyl cellulose having a weight average molecular weight of 180,000 g/mol or more and a degree of substitution of 0.6 to 1.2.

The porous substrate may be hydrophilically surface-treated. Preferably, the porous substrate may be hydrophilically surface-treated via corona discharge. An increased surface hydrophilicity of the porous substrate may lead to an increased adhesive strength and/or alleviate delamination of the coating layer, which may result in an improved lifetime or stability.

The composite separator according to an embodiment may have the following anti-blocking performance:

[Anti-blocking performance]

Two sheets of the composite separators were placed so that they faced the coating layer, respectively, pressing was performed at a temperature of 25°C and a pressure of 15 kgf/cm$^2$ for an hour, the separators were peeled off at 180° in accordance with ASTM D903, and it was confirmed whether organic particles and/or inorganic particles were desorbed, through scanning electron microscope (SEM). 10 random positions were specified, the number of desorbed organic particles and/or inorganic particles per unit area was counted, and as a result of deriving an average value of 10 points, the value was less than $10^{-4}/\mu m^2$, or neither organic particles nor inorganic particles were desorbed.

When the composite separator according to an embodiment is subjected to a cardboard test and a degree of foreign matter smeared on a surface of a cardboard is evaluated, a ratio of an area occupied by the smeared foreign matter to an area of the cardboard may be 5% or less:

[Cardboard test]

A black cardboard and a rubber pad having a size of 2 cm × 10 cm are sequentially placed on a coating layer of a composite separator specimen having a size of 5 cm × 10 cm, the cardboard is pulled out horizontally at a speed of 0.1 m/s for a distance of 60 mm while a force of 10 N is applied to the rubber pad using a pressing device, and a degree of foreign matter smeared on the surface of the cardboard is tested.

In another general aspect, a method for manufacturing a composite separator may be provided, comprising: applying a composition for forming a coating layer including organic particles on at least one surface of a porous substrate; and drying the composition to form a coating layer, the coating layer being configured to satisfy the following Equation 1:

[Equation 1]

$$4,000 \leq (A \times D2)/T \leq 5,500$$

wherein

A is the number of the organic particles per unit area (/mm2) on a surface of the coating layer;

D is an average particle diameter ($\mu$m) of the organic particles observed on the surface of the coating layer; and

T is a total thickness ($\mu$m) of the coating layer,

Preferably, the drying is performed by drying by warm air, hot air, or low-humidity air, vacuum drying, or irradiation with far infrared rays, and/or electron beam-induced radiation.

Further preferably, a drying time is 30 seconds to 500 seconds.

In another general aspect, an electrochemical device includes: a positive electrode, a negative electrode, and a composite separator, wherein the composite separator includes a porous substrate and a coating layer which is formed on at least one surface of the substrate and includes organic particles, and the coating layer satisfies the following Equation 1:

[Equation 1]

$$4{,}000 \leq (A \times D^2)/T \leq 5{,}500$$

wherein

A is the number of the organic particles per unit area (/mm$^2$) on a surface of the coating layer;

D is an average particle diameter ($\mu$m) of the organic particles observed on the surface of the coating layer; and T is a total thickness ($\mu$m) of the coating layer.

Other features and aspects will be apparent from the following detailed description, the drawings, and the claims.

## BRIEF DESCRIPTION OF THE DRAWINGS

FIG. 1 shows the results of measuring the number of organic particles per unit area on a surface of a coating layer of the composite separator of Example 1.

FIG. 2 shows the results of (a) an example in which organic particles were desorbed and (b) an example in which organic particles and inorganic particles were desorbed, in an anti-blocking performance evaluation.

FIG. 3 shows an example of a method for measuring an average particle diameter on a surface of a coating layer of organic particles.

FIG. 4 is a schematic plan view of an electrochemical device based on an example embodiment.

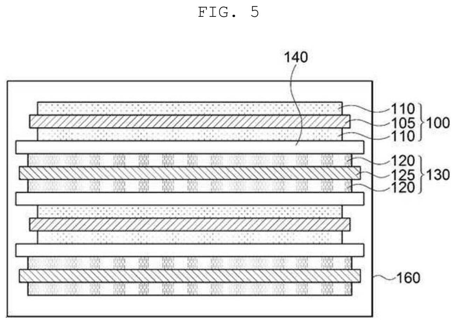

FIG. 5 is a schematic cross-sectional view of an electrochemical device based on an example embodiment.

[Detailed Description of Main Elements]

100:    Positive electrode
105:    Positive electrode current collector
107:    Positive electrode lead
110:    Positive electrode mixed layer
120:    Negative electrode mixed layer
125:    Negative electrode current collector
127:    Negative electrode lead
130:    Negative electrode
140:    Separator
150:    Electrode assembly
160:    Case

## DETAILED DESCRIPTION OF EMBODIMENTS

In the present specification, unless otherwise defined, all technical terms and scientific terms have the same meanings as those commonly understood by a person skilled in the art to which the present invention pertains. The terms used herein are only for effectively describing a certain specific example and are not intended to limit the present invention.

The singular form used in the present specification may be intended to also include a plural form, unless otherwise indicated in the context.

Throughout the present specification, unless otherwise particularly stated, the word "comprise", "equipped", "contain", or "have" does not mean the exclusion of any other constituent element, but means further inclusion of other constituent elements, and elements, materials, or processes which are not further listed are not excluded.

The numerical range used in the present specification includes all values within the range including the lower limit and the upper limit, increments logically derived from the form and breadth of a defined range, all double limited values, and all possible combinations of the upper limits and the lower limits in the numerical range defined in different forms. Unless otherwise defined in the present specification, values which may be outside a numerical range due to experimental error or rounding off of a value are also included in the defined numerical range.

Unless otherwise particularly defined in the present specification, "about" may be considered as a value within 30%, 25%, 20%, 15%, 10%, or 5% of a stated value.

In the present specification, "equivalent spherical diameter (Dv50)" refers to a particle diameter of sample particles to be measured which correspond to 50% in terms of a volume-based accumulated fraction. The average particle diameter may be derived from particle size distribution results obtained by collecting a sample in accordance with the standard of ISO 13320-1 for sample particles to be measured and performing analysis using S3500 available from MICROTRAC, in which the sample to be measured refers to inorganic particles and organic particles.

In the present specification, "polymer" refers to a compound formed by polymerizing one or more types of monomers and includes both a homopolymer formed of a single monomer and a copolymer formed of two or more different monomers. In addition, the "polymer" of the present specification includes polymers according to a molecular structure such as linear, branched, or reticular structure.

Hereinafter, the present disclosure will be described in detail. However, it is only illustrative, and the present disclosure is not limited to the specific exemplary embodiment which is illustratively described.

A conventional technology suggested introduction of a fusing agent which may implement fusion strength with an electrode, in order to solve an insufficient adhesive strength problem between a separator and an electrode; however, recently, as thinning of separators is in progress for high capacity and high output characteristics of an electrochemical device, there were limitations such as occurrence of a blocking phenomenon due to desorption of the fusing agent when sufficient fusion strength is intended to be implemented even in a small thickness range.

Thus, the present inventors discovered a relationship among the number of organic particles per unit area observed on the surface of a coating layer, an average particle diameter of organic particles observed on the surface of the coating layer, and the total thickness of the coating layer, in a composite separator including: a porous substrate; and a coating layer which is formed on the substrate and includes organic particles for implementing fusion strength with an electrode, in which the composite separator has excellent adhesive strength between inorganic particles and between inorganic particles and the substrate even at a small thickness, secures fusion strength with an electrode, and has excellent anti-blocking performance.

Specifically, the composite separator according to an embodiment includes a porous substrate; and a coating layer which is formed on at least one surface of the substrate and includes organic particles, wherein the coating layer satisfies the following Equation 1:

$$[\text{Equation 1}]$$

$$4{,}000 \le (A \times D^2)/T \le 5{,}500$$

wherein

A is the number of the organic particles per unit area ($/mm^2$) on a surface of the coating layer;
D is an average particle diameter ($\mu m$) of the organic particles observed on the surface of the coating layer; and
T is a total thickness ($\mu m$) of the coating layer.

Since the composite separator according to an embodiment satisfies the number of organic particles per unit area on the surface of the coating layer, an average particle diameter of the organic particles observed on the surface of the coating layer, and the value of Equation 1 with respect to the total thickness of the coating layer in a range of 4,000 to 5,500, sufficient fusion strength with an electrode may be implemented, internal resistance may be decreased, and electrical performance may be improved. In addition, since the composite separator according to an embodiment satisfies the value of Equation 1 in a range of 4,000 to 5,500, sufficient fusion strength with an electrode is implemented, internal resistance is decreased, and electrical performance may be improved preferably without providing a separate adhesive layer. In addition, the composite separator according to an embodiment may have excellent heat resistance and adhesive strength even at a small thickness, may effectively suppress a shrinkage phenomenon at a high temperature, may suppress a desorption phenomenon and a blocking phenomenon of organic particles during winding, and when inorganic particles are included in the coating layer, may suppress a desorption phenomenon and a blocking phenomenon of inorganic particles and/or organic particles. In addition, the electrochemical device employing the separator may satisfy safety, high capacity, and high output characteristics simultaneously.

In measuring the number of organic particles per unit area on the surface of the coating layer, the average particle diameter of the organic particles observed on the surface of the coating layer, and the thickness of the coating layer, the composite separator may be a composite separator before battery assembly or a composite separator obtained by disassembling a battery after assembling. As an example, when the thickness is measured using the composite separator obtained by disassembling a battery after assembling, it may be measured by disassembling the battery regardless of the time elapsed after assembling the battery and then washing and drying the separator, in which the drying may be performed in a vacuum oven under temperature conditions of 20 to 50°C or 20 to 40°C for 10 to 30 hours or 20 to 30 hours, and when the measurement is difficult due to an electrolyte salt and the like, it may be performed by repeating washing and drying.

In an exemplary embodiment, Equation 1 may be 4,000 to 5,500, 4,000 to 5,400, or 4,200 to 5,400, may include all possible combinations of the upper limits and the lower limits in the numerical range, may improve effects of fusion strength and anti-blocking performance simultaneously, and may improve stability and capacity of a battery.

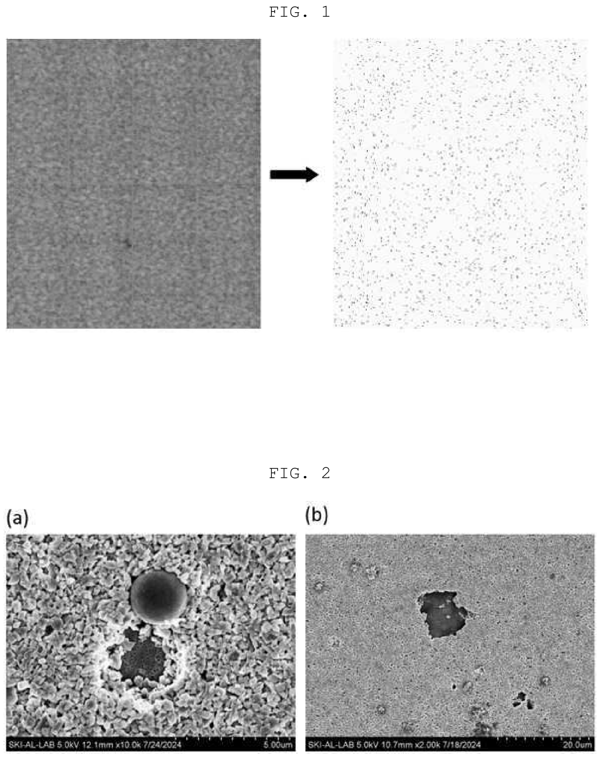

In an exemplary embodiment, the number of organic particles per unit area ($/mm^2$) on the surface of the coating layer may be measured by photographing the surface of the coating layer using an optical microscope and imaging. Specifically, 10 random points are specified on the surface of the coating layer using an optical microscope, an area having a size of 1 mm × 1 mm per position is photographed and converted into an image (FIG. 1), the number of the organic particles observed in the area of the converted image is counted, and calculation is performed by deriving the average value of 10 points.

In an exemplary embodiment, the number of the organic particles per unit area on the surface of the coating layer may be 300 or more, 400 or more, 500 or more, 600 or more, 700 or more, 800 or more, 1000 or more, or 5,000 or less or 4,000 or less or 3,000 or less, and for example, may be 500 to 3,000, 500 to 2,800, 500 to 2,600, 600 to 2,600, or 700 to 2,600, and may include all possible combinations of the upper limits and the lower limits of the numerical ranges.

The number of the organic particles per unit area on the surface of the coating layer may be adjusted by an equivalent spherical diameter (Dv50) of the organic particles, a content of the organic particles, a thickness of the coating layer, an application method of the coating layer, drying conditions of the coating layer, or a combination thereof, but the means is not particularly limited.

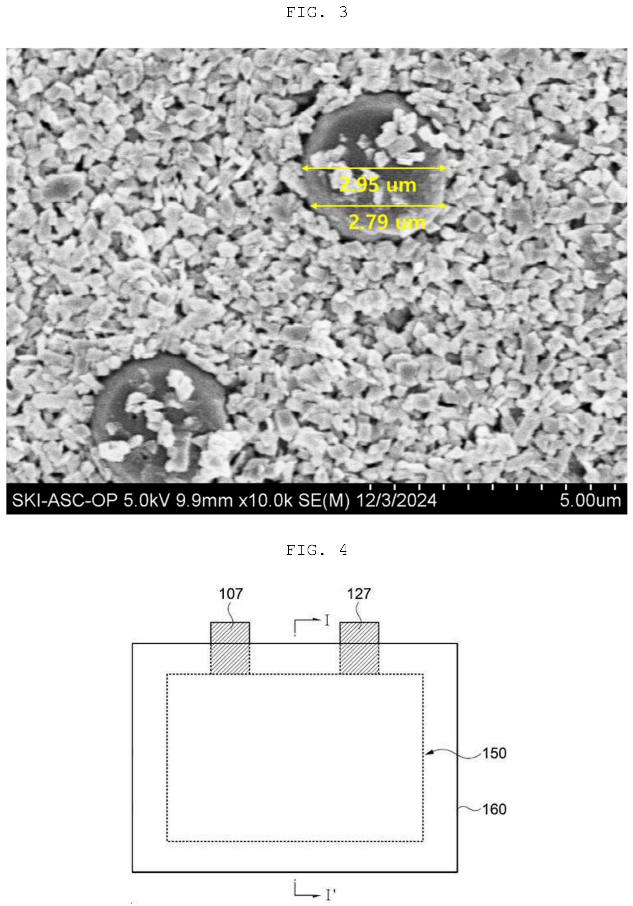

In an exemplary embodiment, the average particle diameter (D) of the organic particles observed on the surface of the coating layer may be measured by observing the surface of the coating layer of the composite separator with a scanning electron microscope (SEM). Specifically, an SEM image of the surface of the coating layer of the composite separator is enlarged to an SEM 10k magnification through Hitachi S-4800, the longest diameter of one organic particle is measured from the enlarged image (FIG. 3) and then rounded to the one decimal place (unit: $\mu$m), the measurement is performed identically for 20 organic particles, the values are averaged, and the average value is set as the average particle diameter of the organic particles on the surface of the coating layer.

In an exemplary embodiment, the average particle diameter (D) of the organic particles observed on the surface of the coating layer is not particularly limited as long as the range of Equation 1 is satisfied by the combination of the number of the organic particles per unit area observed on the surface of the coating layer and the total thickness of the coating layer, but as an example, may be 1 $\mu$m or more, 1.5 $\mu$m or more, 2.0 $\mu$m or more, 2.5 $\mu$m or more and 10 $\mu$m or less, 8 $\mu$m or less, 6 $\mu$m or less, or 5 $\mu$m or less, or 1 $\mu$m to 10 $\mu$m, 1 $\mu$m to 8 $\mu$m, 1 $\mu$m to 6 $\mu$m, or 2 $\mu$m to 6 $\mu$m, may include all possible combinations of the upper limits and the lower limits of the numerical ranges, and may improve fusion strength and anti-blocking performance.

In an exemplary embodiment, the organic particles may have a glass transition temperature ($T_g$) of 40°C or higher, 45°C or higher, 50°C or higher, or 60°C or higher and 100°C or lower, 90°C or lower, or 80°C or lower, or 40°C to 100°C, 40°C to 90°C, or 40°C to 80°C, and may include all possible combinations of the upper limits and the lower limits of the numerical ranges. When the range is satisfied, fusion strength between the composite separator and the electrode may be expressed better, and battery performance after assembling a battery may be better. Preferably, the glass transition temperature may be 40°C to 70°C, and within the range, flowing does not occur during a drying process, there is no deformation in a coating step and a shipping process, and also a change in air permeability of a substrate is minimized even after fusing to maintain excellent performance, which is thus further preferred. Herein, the glass transition temperature is determined by measuring a heat capacity of a sample by heating at a rate of 10°C/min in a range of -100°C to 250°C under nitrogen atmosphere using a differential scanning calorimetry (DSC), and setting a temperature at a middle point of an interval where the heat capacity of the sample rapidly changed as a glass transition temperature.

The organic particles are not particularly limited as long as they are a particulate organic material which may implement fusion strength with an electrode, but may include an acryl-based polymer, a urethane-based polymer, a fluorine-based polymer, or a combination of two or more.

The acryl-based polymer may be a homopolymer including a (meth)acrylate-based monomer polymerization unit or a copolymer including a (meth)acrylate-based monomer polymerization unit. In addition, it may include a homopolymer including an alkyl (meth)acrylate-based monomer polymerization unit or a copolymer including the alkyl (meth)acrylate-based monomer polymerization unit. The alkyl (meth)acrylate-based monomer may include a C1-C10 alkyl (meth)acrylate-based monomer, a C1-C6 alkyl (meth)acrylate-based monomer, or C1-C4 alkyl (meth)acrylate-based monomer, and specifically, may include one or two or more selected from methyl (meth)acrylate, ethyl (meth) acrylate, and n-butyl (meth)acrylate.

The copolymer including the alkyl (meth)acrylate-based monomer polymerization unit including may include a copolymer including an alkyl (meth)acrylate-based monomer polymerization unit; and one or two or more polymerization units selected from a styrene-based monomer polymerization unit, a butadiene-based monomer polymerization unit, and a vinyl-based monomer polymerization unit.

The fluorine-based polymer may include a polyvinylidene fluoride (PVdF)-based polymer. The polyvinylidene fluoride-based polymer may be, as an example, a polyvinylidene fluoride homopolymer, polyvinylidene fluoride-hexafluoropropylene, polyvinylidene fluoride-trichloroethylene, polyvinylidene fluoride-chlorotrifluoroethylene, and other known fluorine-containing polymers and copolymers, and may include one or more selected therefrom. Besides, a polyvinylidene fluoride-based polymer including a vinylidene fluoride repeating unit (A) and other repeating units (B) capable of polymerizing the said repeating unit may be used.

A non-limiting example of the organic particles may include polyurethane beads, polyurethane acryl beads, epoxy-acryl beads, polyacrylate, polymethacrylate, polyvinylidene fluoride, polyvinylidene fluoride-hexafluoropropylene (PVdF-HFP), polyvinylidene fluoride-trichloroethylene (PVdF-TCE), polyvinylidene fluoride-chlorotrifluoroethylene (PVdF-CTFE), polystylene-polybutyl methacrylate-polymethyl methacrylate (PS-PBMA-PMMA), polybutyl methacrylate-polymethyl methacrylate (PBMA-PMMA), polystyrene-polydimethylsiloxane-polybutyl methacrylate (PS-PDMS-PBMA), polystyrene-polydimethylsiloxane-polymethyl methacrylate (PS-PDMS-PMMA), polydimethylsiolxane-polymethyl methacrylate (PDMS-PMMA), or a combination of one or more thereof, but is not limited thereto.

A method for manufacturing the organic particles is a known manufacturing method and may be performed by emulsion polymerization or suspension polymerization, and thus, detailed description thereof will be omitted.

In addition, the composite separator according to an embodiment may further include inorganic particles and a binder, and the coating layer of the composite separator according to an embodiment may include the organic particles, the inorganic particles, and the binder described above as a single coating layer, or the coating layer of the composite separator according to an embodiment may include both an organic particle layer including the organic particles described above and an inorganic particle layer including the inorganic particles and the binder.

Specifically, the composite separator according to an embodiment may include the inorganic particles, the binder, and the organic particles as a single coating layer, and in this case, the internal resistance of a battery is further decreased later, electrical performance is further improved, and fusion strength with an electrode is secured, which is thus preferred, but the present invention is not limited thereto.

In an exemplary embodiment, the composite separator includes a porous substrate and a coating layer formed on one or both surfaces of the porous substrate, and the coating layer may have inorganic particles connected and fixed by a binder to form pores between the inorganic particles.

In an exemplary embodiment, the binder is not particularly limited as long as it is a common binder used in the art, and as a non-limiting example, may include one or two or more selected from (meth)acryl-based polymers, fluorine-based polymers, styrene-based polymers, vinyl alcohol-based polymers, vinyl ester-based polymers, vinylpyrrolidone-based polymers, cellulose-based polymers, polyimide-based polymers, polyamide-based polymers, and polyalkylene glycol. The (meth)acryl-based polymer may include, as an example, one or more selected from polyalkyl (meth)acrylate, poly(meth)acrylic acid, poly(meth)acrylamide, poly(meth)acrylonitrile, polyhydroxyethyl (meth)acrylate, copolymers thereof, or other known (meth)acryl-based copolymers. The fluorine-based polymer may include a polyvinylidene fluoride (PVdF)-based polymer. The polyvinylidene fluoride-based polymer may be, as an example, a polyvinylidene fluoride homopolymer, polyvinylidene fluoride-hexafluoropropylene, polyvinylidene fluoride-trichloroethylene, polyvinylidene fluoride-chlorotrifluoroethylene, and may include one or more selected therefrom. Besides, a polyvinylidene fluoride-based polymer including a vinylidene fluoride repeating unit (A) and other repeating units (B) capable of polymerizing the said repeating unit may be used. The styrene-based polymer may include, as an example, one or more selected from polystyrene, polyalphamethylstyrene, polybromostyrene, copolymers thereof, or other known styrene-based co- or terpolymers. The vinyl alcohol-based polymer may include, as an example, one or more selected from polyvinyl alcohol, copolymers including the same, or other vinyl alcohol-comprising polymers or copolymers. The vinyl ester-based polymer may include, as an example, one or more selected from polyvinyl ester, copolymers including the same, or other known vinyl ester-comprising co- or terpolymers. The cellulose-based polymer may include, as an example, one or more selected from cellulose, carboxymethyl cellulose, hydroxypropylmethyl cellulose, cellulose acetate, cellulose acetate propionate, or other cellulose-based co- or terpolymers.

In an exemplary embodiment, the binder may include a (meth)acryl-based polymer, a cellulose-based polymer, or a combination thereof.

Specifically, the binder may include polyacrylamide (PAAm), carboxymethyl cellulose, or a combination thereof. In addition, the binder may include a mixed binder of polyacrylamide and carboxymethyl cellulose, and in this case, the intended effect in the present invention may be improved even further, and thus, it may be favorable, but the present invention is not limited thereto.

In an exemplary embodiment, the carboxymethyl cellulose may have a weight average molecular weight of 180,000 to 1,500,000 g/mol, 180,000 to 1,300,000 g/mol, or 200,000 to 1,000,000 g/mol, and may include all possible combinations of the upper limits and the lower limits of the numerical ranges. In addition, the carboxymethyl cellulose may have a degree of substitution of 0.6 to 1.2, 0.6 to 1.1, 0.6 to 1.0, 0.7 to 1.0, 0.8 to 1.0, or 0.9 to 1.0, and may include all possible combinations of the upper limits and the lower limits of the numerical ranges. The weight average molecular weight may refer to a weight average molecular weight converted with a molecular weight calibration curve using a polysaccharide standard sample measured by a GPC method.

Herein, the carboxymethyl cellulose (CMC) refers to a cellulose derivative in which a hydroxyl group (-OH) of cellulose is substituted with $-OCH_2COOH$ and/or $-OCH_2COO^-M^+$ and etherized in which $M^+$ is an alkali metal cation and may be selected from lithium (Li), sodium (Na), potassium (K), rubidium (Rb), cesium (Cs), and francium (Fr). $M^+$ may also be or further comprise ammonium ($NH_4^+$). In the present specification, the "degree of substitution (DS)" of carboxymethyl cellulose refers to the number of substituents included in one anhydrous glucose unit in a cellulose molecule, may be measured by a known or conventional method, and, for example, may be measured in accordance with ASTM D1439, and may be calculated by $^1$H-NMR or $^{13}$C-NMR analysis.

The degree of substitution (DS) of carboxymethyl cellulose (CMC) was measured according to a titration method based on ASTM D1439. The experiment was carried out using a magnetic stirrer, aspirator, dry oven, 300 mL beaker, pipette, 250 mL Erlenmeyer flask, and Petri dish. The reagents used included 80% ethanol, 100% ethanol, 0.1 N sodium hydroxide (NaOH), phenolphthalein indicator, and 0.1 N sulfuric acid ($H_2SO_4$). Specifically, 150 mL of 80% ethanol was added to a 300 mL beaker, followed by 10 mL of 1 N nitric acid ($HNO_3$). Approximately 1-2 g of CMC sample was introduced into the beaker and stirred for 1 hour to convert the sodium salt form of CMC into the acid form (CMC-acid). After allowing the mixture to stand for about 10-20 minutes, the supernatant was decanted. Then, 150 mL of 80% ethanol was added again and stirred for 30-40 minutes, followed by decanting the supernatant once more. The precipitated CMC-acid was filtered using an aspirator and washed with 500 mL of 80% ethanol, followed by one or two washes with 100% ethanol. The central portion of the CMC-acid was collected in a clean weighing dish and dried in a dry oven for 20-30 minutes. After drying, approximately 0.2 $\pm$ 0.05 g of the dried sample was weighed accurately, and 25 mL of 0.1 N NaOH solution was added. The sample solution was then transferred to a 250 mL Erlenmeyer flask containing 100 mL of distilled water and stirred for 40-60 minutes until completely dissolved. Two to three drops of phenolphthalein were added as an indicator, and the solution was titrated with 0.1 N $H_2SO_4$ while stirring until the color changed from red to colorless. The number of millimoles of CMC-acid per gram of dried sample (A) was determined according to the following equation:

$$A = \frac{\text{(millimoles of CMC Acid)}}{\text{Sample dry weight (g)}}$$

The degree of substitution (DS) was then calculated from A using the following equation:

$$B \text{ (D.S. value)} = \frac{162 \times A}{10,000 - 58 \times A}$$

.

In an exemplary embodiment, the polyacrylamide may have a weight average molecular weight of 100,000 g/mol or more, 150,000 g/mol or more, or 180,000 g/mol or more and 500,000 g/mol or less, 400,000 g/mol or less, 300,000 g/mol or less, or 250,000 g/mol or less, and specifically, 100,000 g/mol to 300,000 g/mol or 150,000 to 250,000 g/mol, or all possible combinations of the upper limits and the lower limits of the numerical ranges, but is not limited thereto. The weight average molecular weight may refer to a weight average molecular weight converted with a molecular weight calibration curve using a polystyrene standard sample measured by a GPC method. The GPC method may be carried out at an ambient temperature, and the sample is prepared by dissolving CMC at a concentration of approximately 0.1% w/v in a standard reference solvent. The prepared solution is then injected into the GPC instrument for analysis.

When the binder includes carboxymethyl cellulose and polyacrylamide, the carboxymethyl cellulose and the polyacrylamide may be used at a weight ratio of 10 to 50: 90 to 50 or 10 to 40: 90 to 60.

In an exemplary embodiment, the type of inorganic particles may be used without limitation as long as the particles are commonly used in the art, and as a non-limiting example, may be one or two or more selected from metal oxides, metal hydroxide, metal carbides, metal nitrides, and metal carbonitrides, such as boehmite, pseudo-boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

In an exemplary embodiment, the inorganic particles may have an equivalent spherical diameter (Dv50) of, for example, 0.01 $\mu$m or more, 0.02 $\mu$m or more, 0.05 $\mu$m or more, 0.1 $\mu$m or more and 0.01 $\mu$m to 10 $\mu$m, 0.02 $\mu$m to 5.0 $\mu$m, 0.1 $\mu$m to 3.0 $\mu$m, 0.1 $\mu$m to 2.0 $\mu$m, 0.1 $\mu$m to 1.0 $\mu$m, or 0.1 $\mu$m to 0.5 $\mu$m, or may include all possible combinations of the upper limits and the lower limits of the numerical ranges, but is not limited thereto.

In an exemplary embodiment, the coating layer may include 90 to 99.9 wt%, 92 to 99.5 wt%, 92 to 99 wt%, 95 to 99 wt%, or 96 to 99 wt% of the inorganic particles with respect to the total weight of the coating layer, and when compared with the content of the inorganic particles in a conventional coating layer formed by connecting inorganic particles including the binder, more inorganic particles may be included, but since heat resistance and stability are excellent, the coating layer (coating layer) may be formed at a smaller thickness.

In an exemplary embodiment, the coating layer may include 0.1 wt% or more, 0.5 wt% or more, 1.0 wt% or more, more than 1.0 wt%, 1.1 wt% or more, or 1.2 wt% or more and 5 wt% or less, 4 wt% or less, 3 wt% or less, 2 wt% or less, or less than 2 wt%, specifically 0.5 wt% to 5 wt%, 1 wt% to 5 wt%, 1 wt% to 3 wt%, or more than 1 wt% and less than 2 wt% of the organic particles, with respect to the total weight of the coating layer, and may include all possible combinations of the upper limits and the lower limits of the numerical ranges.

In an exemplary embodiment, the binder and the organic particles may be included at a weight ratio of 5:5 to 9:1, 5:5 to 8:2, or 5:5 to 7:3.

In an exemplary embodiment, the composite separator may have anti-blocking performance, and the anti-blocking performance refers to performance capable of suppressing a desorption phenomenon and a blocking phenomenon of the organic particles and/or the inorganic particles during separator winding. Specifically, two sheets of the composite separators were placed so that they faced the coating layer, respectively, pressing was performed at a temperature of 25°C and a pressure of 15 kgf/cm$^2$ for an hour, the separators were peeled off at 180° in accordance with ASTM D903, it was confirmed whether organic particles and/or inorganic particles were desorbed, through scanning electron microscope (SEM), 10 random positions were specified, the number of desorbed organic particles and/or inorganic particles per unit area was counted, and as a result of deriving an average value of 10 points, when the number of desorbed particles was less than $10^{-4}/\mu m^2$, or neither organic particles nor inorganic particles were desorbed, the composite separator was determined to have anti-blocking performance.

In addition, in an exemplary embodiment, when a degree of foreign matter smeared on the surface of a cardboard is evaluated after a cardboard test of the composite separator, a ratio of an area occupied by the smeared foreign matter to an area of the cardboard may be 5% or less, specifically less than 5%, less than 4%, less than 3%, less than 2%, or less than 1.5%.

The cardboard test method involves placing a black cardboard and a rubber pad having a size of 2 cm $\times$ 10 cm sequentially on an upper surface of a coating layer of a composite separator specimen having a size of 5 cm $\times$ 10 cm, and pulling out the cardboard horizontally at a speed of 0.1 m/s in a state of applying a force of 10 N to the rubber pad using a pressing device to evaluate an area as a degree of foreign matter smeared on the surface of the cardboard, in which the foreign matter may be the constituent components of the coating layer, for example, the inorganic particles, the binder, or a combination thereof.

When the adhesive strength is evaluated using the cardboard test method as described above, measurement may be performed considering adhesive strength between the inorganic particles in the coating layer as well as adhesive strength between interfaces of the substrate and the coating layer, and from the results of the adhesive strength test, a heat shrinkage degree may be predicted more accurately as compared with a conventional peel test. That is, when a ratio of an area occupied by the smeared foreign matter calculated by the cardboard test is less than 5%, less than 4%, less than 3%, less than 2%, or less than 1.5%, it means that adhesive strengths between the inorganic particles and between the inorganic particles and the substrate are all excellent, and the heat shrinkage phenomenon may be effectively suppressed.

In addition, in an exemplary embodiment, heat shrinkage rates in MD and TD directions of the composite separator which is measured after the separator is allowed to stand at 150°C for 60 minutes may be both 5% or less, specifically 3% or less, 2.5% or less, 2.0% or less, 1.5% or less, 1.0% or less, or 0.5% or less, respectively measured at an ambient temperature. The heat shrinkage rate of the composite separator was measured based on the ASTM D1204 standard, but the following method was used. Lattice points were marked at 2 cm intervals on a square with one side of 10 cm on the composite separator specimen, and one side of the square was the transverse direction (TD) and the other one was the machine direction (MD). The specimen was placed right in the center, 5 sheets of paper were placed on and under the specimen, respectively, the four sides of the paper were taped, and the taped specimen was allowed to stand in a hot air drying oven at 150°C for 60 minutes. Thereafter, the specimen was taken out, and the separator was observed with a camera to calculate the shrinkage rate in the machine direction (MD) and the shrinkage rate in the transverse direction (MD) at an ambient temperature.

As an example, a method such as a peeling test used for evaluating adhesive strength of an inorganic particle coating layer in a conventional composite separator is for evaluating adhesive strength between interfaces of the substrate and the inorganic particle coating layer, and the adhesive strength between the inorganic particles is difficult to be predicted, and the heat shrinkage characteristics of the separator may not be accurately predicted with the evaluated value.

In an exemplary embodiment, the porous substrate is not limited as long as it is commonly used in the art, and for example, may be a woven fabric, a non-woven fabric, or a porous film. Specifically, the porous substrate may be polyolefins such as polyethylene and polypropylene, polyesters such as polyethylene terephthalate and polybutylene terephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, PTFE/Teflon, and/or polytetrafluoroethylene, and any two or more of them may be used. Among the porous substrates, since a porous film is manufactured by a dry method or a wet method and is known in the art, it will not be described any more.

In an exemplary embodiment, the porous substrate may have a porosity of 20 to 60%, 30 to 60%, 30 to 50%, or 35 to 45%, but is not limited thereto.

In an exemplary embodiment, the porous substrate may have a polar functional group introduced by performing a hydrophilic surface treatment and implement better adhesive strength. The polar functional group may be a carboxyl group, an aldehyde group, a hydroxyl group, and other known polar functional groups such as a keto group, and the hydrophilic surface treatment may be, as an example, a corona discharge treatment or a plasma discharge treatment, but is not particularly limited.

In an exemplary embodiment, the thickness of the porous substrate is not particularly limited, and for example, may be 1 $\mu$m to 100 $\mu$m, 1 $\mu$m to 50 $\mu$m, 1 $\mu$m to 30 $\mu$m, 5 $\mu$m to 20 $\mu$m, 5 $\mu$m to 15 $\mu$m, 5 $\mu$m to 12 $\mu$m, 5 $\mu$m to 10 $\mu$m, or any value between the numerical values.

In an exemplary embodiment, the coating layer may be coated on one or both surfaces of the porous substrate, and when the coating layer is coated on both surfaces of the porous substrate, the thicknesses of the coating layers coated on one surface and on the other surface may be the same as or different from each other.

The total thickness of the coating layer is not particularly limited as long as the range of Equation 1 is satisfied by a combination of the number of the organic particles per unit area and the average particle diameter of the organic particles observed on the surface of the coating layer, but, for example, may be 0.1 $\mu$m to 20.0 $\mu$m, 0.1 $\mu$m to 10 $\mu$m, 0.5 $\mu$m to 10.0 $\mu$m, 1 $\mu$m to 10 $\mu$m, 1 $\mu$m to 8 $\mu$m, 1 $\mu$m to 5 $\mu$m, more than 1 $\mu$m and less than 5 $\mu$m, 1.5 $\mu$m to 5 $\mu$m, 2 $\mu$m to 5 $\mu$m, or 2 $\mu$m to 4 $\mu$m, or any value between the numerical values. Since the composite separator according to an exemplary embodiment may implement excellent adhesive strength and heat resistance even when the coating layer is formed at a small thickness, an electrochemical device employing the separator may satisfy high safety standards, and simultaneously achieve high capacity and output characteristics. Here, output may be defined as the rate at which a battery delivers energy, measured in watts (W) and calculated by multiplying the battery's discharge voltage by its discharge current.

The composite separator according to an embodiment may have a thickness of 1 $\mu$m to 200 $\mu$m, 2 $\mu$m to 200 $\mu$m, 5 $\mu$m to 200 $\mu$m, 5 $\mu$m to 150 $\mu$m, 5 $\mu$m to 100 $\mu$m, 5 $\mu$m to 50 $\mu$m, 5 $\mu$m to 30 $\mu$m, or 5 $\mu$m to 20 $\mu$m, or may include all possible combinations of the upper limits and the lower limits of the numerical ranges, but is not limited thereto.

Another embodiment of the present invention provides a method for manufacturing the composite separator, and the method for manufacturing a composite separator may include: applying a composition for forming a coating layer including organic particles on at least one surface of a porous substrate and drying the composition to form a coating layer, in which the coating layer may satisfy the following Equation 1:

$$[\text{Equation 1}]$$

$$4{,}000 \leq (A \times D^2)/T \leq 5{,}500$$

wherein

A is the number of the organic particles per unit area ($/mm^2$) on a surface of the coating layer;
D is an average particle diameter ($\mu$m) of the organic particles observed on the surface of the coating layer; and
T is a total thickness ($\mu$m) of the coating layer.

Since A, D, T, the porous substrate, the organic particles, and the coating layer are as described above, detailed description will be omitted.

The composition for forming a coating layer further includes a solvent, and the solvent may be water, lower alcohols such as ethanol, methanol, and propanol, solvents such as dimethylformamide, acetone, tetrahydrofuran, diethyl ether, methylene chloride, N-methyl-2-pyrrolidone, hexane, and cyclohexane, or a mixture thereof, but is not necessarily limited thereto.

The composition for forming a coating layer may further include a binder and inorganic particles, and the agglomerated inorganic particles may be dispersed using a ball mill.

In an exemplary embodiment, though a solid content of the composition for forming a coating layer is not particularly limited, it may be, for example, 1 to 50 wt%, 5 to 30 wt%, or 10 to 30 wt%, but is not limited thereto. In addition, the composition for forming a coating layer may have a viscosity based on a solid content of 25 wt% of 800 to 5,000 cps, 800 to 4,000 cps, 800 to 3,000 cps, or 1,000 to 3,000 cps, at which it may be more easy to form the coating layer, and an effect of improving heat resistance and adhesive strength of the separator may be improved.

In an exemplary embodiment, a method for applying or coating the composition for forming a coating layer on the porous substrate is not particularly limited, but for example, roll coating, spin coating, dip coating, bar coating, die coating, slit coating, or inkjet printing may be used.

In an exemplary embodiment, the drying may be performed by drying by warm air, hot air, or low-humidity air, vacuum drying, or irradiation with far infrared rays, electron beams, or other known drying methods that comprise radiation suitable for heating. The drying temperature may be appropriately adjusted depending on experimental environment or purpose and may be, for example, 30°C or higher, 40°C or higher, or 50°C or higher and 70°C or less or 60°C or less. Specifically, it may be 30°C to 70°C, 40°C to 70°C, 40°C to 60°C, 50°C to 70°C, or 50°C to 60°C. The drying time may be 30 seconds to 500 seconds, 60 seconds to 500 seconds, 100 seconds to 500 seconds, 100 seconds to 400 seconds, 150 seconds to 400 seconds, about 180 seconds to 400 seconds, 200 seconds to 400 seconds, or 300 seconds. When the drying conditions are satisfied, the value of Equation 1 may be more appropriately adjusted, and within the range satisfying the range of Equation 1, the drying conditions are not particularly limited.

Another embodiment of the present invention provides an electrochemical device including the composite separator according to an exemplary embodiment, and the electrochemical device may be, as an example, a lithium secondary battery.

Specifically, the electrochemical device according to an embodiment includes: a positive electrode, a negative electrode, and a composite separator, wherein the composite separator includes a porous substrate and a coating layer which is formed on at least one surface of the substrate and includes organic particles, and the coating layer satisfies the following Equation 1 :

$$[\text{Equation 1}]$$

$$4,000 \leq (A \times D^2)/T \leq 5,500$$

wherein

A is the number of the organic particles per unit area ($/mm^2$) on a surface of the coating layer;
D is an average particle diameter ($\mu m$) of the organic particles observed on the surface of the coating layer; and
T is a total thickness ($\mu m$) of the coating layer.

In an exemplary embodiment, the electrochemical device includes a positive electrode, a negative electrode, and a composite separator, in which the composite separator may include a porous substrate and a coating layer formed on one or both surfaces of the substrate, and the coating layer may include inorganic particles, a binder, and organic particles and satisfy Equation 1.

Hereinafter, the electrochemical device according to an exemplary embodiment will be described using a lithium secondary battery as an example, but it may be manufactured with a structure known in the art using a common manufacturing method and common materials in the art, of course, except for including the composite separator according to an exemplary embodiment.

As an example, the lithium secondary battery may be manufactured according to a common manufacturing method of placing a negative electrode, the composite separator, and a positive electrode sequentially, assembling them, and injecting an electrolyte to complete the battery.

[Positive electrode]

The positive electrode may include a positive electrode current collector and a positive electrode mixed layer on at least one surface of the positive electrode current collector, the positive electrode may be manufactured by forming the positive electrode mixed layer by applying a positive electrode material slurry on one or both surfaces of the positive electrode current collector, drying, and rolling, and the positive electrode material slurry may include a positive electrode active material and a binder, and if necessary, may further include a conductive material, a thickening agent, and other additives.

The positive electrode current collector may include a stainless steel, nickel, aluminum, titanium, or an alloy thereof, and may include aluminum or a stainless steel which is surface-treated with carbon, nickel, titanium, gold and/or silver. The positive electrode current collector may have a thickness of, for example, 10 $\mu$m to 50 $\mu$m, but is not limited thereto.

The positive electrode active material is a compound capable of reversibly intercalating and deintercalating lithium ions and may be used without limitation as long as it is commonly used in the art, and as a non-limiting example, it may be a composite oxide of lithium with a metal selected from cobalt (Co), manganese (Mn), nickel (Ni), iron (Fe), niobium (Nb), magnesium (Mg), copper (Cu), zinc (Zn), molybdenum (Mo), tantalum (Ta), tungsten (W), aluminum (Al), and a combination thereof.

In an exemplary embodiment, the positive electrode active material may be a lithium-nickel composite oxide, and the lithium-nickel composite oxide may further include one or two or more selected from cobalt, manganese, and aluminum.

In an exemplary embodiment, the positive electrode active material may include a lithium nickel-cobalt-manganese (NCM)-based composite oxide, and though the composition of the metal is not particularly limited, a high capacity composition having a high nickel content (high-Ni) may be used, and the content of Ni in the NCM-based lithium oxide (for example, a mole fraction of nickel of the total moles of nickel, cobalt, and manganese) may be 0.3 or more, 0.4 or more, 0.5 or more, 0.6 or more, 0.7 or more, or 0.8 or more. In some exemplary embodiments, the content of Ni may be 0.8 to 0.95, 0.82 to 0.95, 0.83 to 0.95, 0.84 to 0.95, 0.85 to 0.95, or 0.88 to 0.95. The NCM-based composite oxide may be, for example, $LiNi_{0.33}Co_{0.33}Mn_{0.33}O_2$, $LiNi_{0.4}Co_{0.2}Mn_{0.4}O_2$, $LiNi_{0.5}Co_{0.2}Mn_{0.3}O_2$, $LiNi_{0.6}Co_{0.2}Mn_{0.2}O_2$, $LiNi_{0.7}Co_{0.15}Mn_{0.15}O_2$, $LiNi_{0.8}Co_{0.1}Mn_{0.1}O_2$, and similar NCM-based composite oxide compositions, but is not limited thereto.

In an exemplary embodiment, the positive electrode active material may be, for example, lithium cobalt oxide-based, lithium manganese oxide-based, lithium nickel oxide-based, lithium iron phosphate-based (LFP, for example, $LiFePO_4$), lithium manganese phosphate-based (for example, $LiMnPO_4$), lithium cobalt phosphate-based (for example, $LiCoPO_4$), lithium iron pyrophosphate-based (for example, $Li_2FeP_2O_7$) materials, and other known transition metal oxide- and phosphorus-containing oxides.

The positive electrode binder is not particularly limited as long as it is commonly used in the art and may include a nonaqueous binder and/or an aqueous binder or include a rubber-based binder and/or a fluorine-based binder, and for example, may be one or two or more selected from acryl-based polymers such as polyacrylate, polymethacrylate, polybutylacrylate, and polyacrylonitrile, fluorine-based polymers such as polyvinylidene fluoride, polyhexafluoropropylene, polyvinylidene fluoride-hexafluoropropylene, and polyvinylidene fluoride-trichloroethylene, polyvinyl acetate, polyethylene oxide, cellulose, modified cellulose, polyamide, polyacrylamide, natural rubber, synthetic rubber, elastomer, but is not limited thereto.

The conductive material may be added for increasing conductivity of the positive electrode mixed layer and/or mobility of lithium ions or electrons. For example, the conductive material may be a linear conductive material and/or a dot-shaped conductive material, and for example, may include a carbon-based conductive material such as graphite, carbon black, acetylene black, ketjen black, graphene, carbon nanotubes, vapor-grown carbon fiber (VGCF), carbon fiber, and carbon nanofiber, and/or a metal-based conductive material including tin, tin oxide, titanium oxide, perovskite materials such as $LaSrCoO_3$ and $LaSrMnO_3$, and other known perovskite-type materials, but is not limited thereto.

[Negative electrode]

The negative electrode may include a negative electrode current collector and a negative electrode mixed layer on at least one surface of the negative electrode current collector, the negative electrode may be manufactured by forming the negative electrode mixed layer by applying a negative electrode material slurry on one or both surfaces of the negative electrode current collector, drying, and rolling, and the negative electrode material slurry may include a negative electrode active material and a binder, and if necessary, may further include a conductive material, a thickening agent, and other conventional additives.

The negative electrode current collector may include a copper foil, a nickel foil, a stainless steel foil, a titanium foil, a nickel foam, a copper foam, a polymer substrate coated with a conductive metal, and other porous collector structures based on transition metal foam(s) or felt(s). The negative electrode current collector may have a thickness of, for example,

10 μm to 50 μm, but is not limited thereto.

The negative electrode active material is a material capable of adsorbing and desorbing lithium ions and may be used without limitation as long as it is commonly used in the art, and as a non-limiting example thereof, carbon-based materials such as crystalline carbon, amorphous carbon, a carbon composite, and carbon fiber; lithium metal; lithium alloy; silicon (Si)-containing materials, tin (Sn)-containing materials, and mixtures thereof may be used.

An example of the amorphous carbon may include hard carbon, soft carbon, coke, mesocarbon microbeads (MCMB), mesophase pitch-based carbon fibers (MPCF), and other nanostructured amorphous or partially amorphous carbon materials, and an example of the crystalline carbon may include graphite-based carbon such as natural graphite, artificial graphite, graphitized coke, graphitized MCMB, and graphitized MPCF. Here, amorphous may refer to a non-crystalline solid lacking a regular, long-range order in the atomic or molecular structure.

An element included in the lithium alloy may include aluminum, zinc, bismuth, cadmium, antimony, silicon, lead, tin, gallium, indium, and/or other transition metal oxides.

The silicon-containing material may provide more increased capacity characteristics. The silicon-containing material may include Si, $SiO_x$ ($0<x\leq2$), metal-doped $SiO_x$ ($0<x\leq2$), a silicon-carbon composite, and/or other transition metal-doped silicon oxide or silicon-carbon composite materials, the metal may include lithium and/or magnesium, and the metal-doped $SiO_x$ ($0<x\leq2$) may include a metal silicate. The materials described above which may be used in manufacture of the positive electrode may be used as the binder, the conductive material, and the thickening agent of the negative electrode.

The negative electrode binder is not particularly limited as long as it is commonly used in the art, and may be rubber-based binders such as a styrene-butadiene rubber (SBR)-based binder, carboxymethyl cellulose (CMC), polyacrylic acid, poly(3,4 ethylenedioxythiophene) (PEDOT)-based binders, and other commercial polymer-based binder. The binder may be a particulate binder.

[Electrolyte]

In an exemplary embodiment, the electrolyte may be a nonaqueous electrolytic solution, and the nonaqueous electrolytic solution may include a lithium salt as an electrolyte and an organic solvent.

The lithium salt is represented by, for example, $Li^+X^-$, and an anion of the lithium salt ($X^-$) may be exemplified by $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, $(CF_3CF_2SO_2)_2N^-$, and similar anions that are known as counterions for $Li^+$.

The organic solvent sufficiently dissolves the lithium salt or the additive, and may include an organic compound having no reactivity in a battery. The organic solvent may include, for example, at least one of carbonate-based solvents, ester-based solvents, ether-based solvents, ketone-based solvents, alcohol-based solvents, and aprotic solvents. The organic solvent may be, for example, one or two or more selected from propylene carbonate, ethylene carbonate, butylene carbonate, diethyl carbonate, dimethyl carbonate, ethyl methyl carbonate, methylpropyl carbonate, ethylpropyl carbonate, dipropyl carbonate, vinylene carbonate, methyl acetate, ethyl acetate, n-propyl acetate, 1,1-dimethylethyl acetate, methyl propionate, ethyl propionate, fluoroethyl acetate, difluoroethyl acetate, trifluoroethyl acetate, dibutylether, tetraethylene glycol dimethylether, diethylene glycol dimethylether, tetrahydrofuran, 2-methyltetrahydrofuran, ethyl alcohol, isopropyl alcohol, dimethylsulfuroxide, acetonitrile, dimethoxyethane, diethoxyethane, sulfolane, γ-butyrolactone, propylene sulfite, and other known organic solvents.

[Cell structure]

For example, electrode tabs (positive electrode tab and negative electrode tab) may protrude from the positive electrode current collector and the negative electrode current collector and extend to one side of a case, respectively. The electrode tabs may be connected to electrode leads (positive electrode lead and negative electrode lead) which are fused with the one side of the case and extended or exposed to the outside of the case. For example, a pouch-type case, an angular case, a cylindrical case, a coin-type case, and other cases to extend the electrical connections may be used.

Hereinafter, the exemplary embodiments described above will be described in detail through the following examples. However, the following examples are only for description, and do not limit the scope of a right.

**[Method for measuring physical properties]**

**1) Average particle diameter (D, unit: μm) on surface of coating layer of organic particles**

The surface of the coating layer of the composite separator was observed with a scanning electron microscope (SEM) to measure the average particle diameter of organic particles observed on the surface of the coating layer.

Specifically, an SEM image of the surface of the coating layer of the composite separator is enlarged to a 10k (i.e., 10,000-fold) magnification through Hitachi S-4800 (accelerating voltage: 5 kV, current: 10 $\mu$A), the longest diameter of one organic particle is measured from the enlarged image (FIG. 3) and then rounded to the one decimal place (unit: $\mu$m), the measurement is performed identically for 20 organic particles, the values are averaged, and the average value is set as the average particle diameter of the organic particles on the surface of the coating layer.

**2) Thickness**

A composite separator was laminated in 10 layers, the thickness was measured at ambient temperature and atmospheric pressure by Mitutoyo (ID-C112X) to derive an average thickness of the 10 layers of the composite separator, and the average thickness was divided by 10 again to determine the thickness of the composite separator. A value obtained by subtracting the thickness of a porous substrate from the thickness of the composite separator was set as a total thickness (T, $\mu$m) of the coating layer.

The thickness of the porous substrate was obtained by laminating only the porous substrate in 10 layers, measuring the thickness by Mitutoyo (ID-C112X) to derive the average thickness of the 10 layers, and dividing the average thickness by 10. In the case of after forming the coating layer, the coating layer was detached, sufficient drying was performed, and the average thickness of the porous substrate from which the coating layer was detached was derived by the method described above.

**3) Number of organic particles per unit area (A, unit: /mm$^2$) on surface of coating layer**

The surface of the coating layer of the composite separator was photographed using an optical microscope (available from Leica-Microsystems, DVM 6) and imaged to measure the number of organic particles per unit area (/mm$^2$) observed on the surface of the coating layer. Specifically, a PlanAPO FOV 3.60 objective lens was mounted on the optical microscope, 10 random positions on the surface of the coating layer were specified, a size area of 1 mm $\times$ 1 mm per position was divided into 6 $\times$ 4, photographed, and connected, and the image was converted by the following image conversion method. The number of the organic particles observed in the area of the converted image was counted, and the average value of 10 positions was derived and set as the number of organic particles per unit area (A) on the surface of the coating layer.

[Image conversion method]

1. A prepared image is opened with ImageJ S/W.
2. The type of image is converted into an 8-bit image.
3. Noises are removed from the image using despeckle and bandpass filter functions to make easy to distinguish the shape of organic particles from the surrounding background.
4. A threshold value is adjusted to separate the shape of the organic particles from the image.
5. A function of analyze particles was executed on the image from which the shape of the organic particles was separated to count the number of the organic particles present in the image (FIG. 1).

**4) Adhesive strength**

[Cardboard test]

A composite separator was cut into a size of 5 cm $\times$ 10 cm to prepare a specimen, and a black cardboard and a rubber pad having a size of 2 cm $\times$ 10 cm were placed sequentially on the coating layer of the composite separator specimen. The cardboard was pulled out horizontally at a speed of 0.1 m/s for a distance of 60 mm in a state of applying a force of 10 N to the rubber pad using a pressing device, adhesive strength was evaluated depending on a degree of foreign matter smeared on the surface of the cardboard, and the foreign matter may be constituent components of the coating layer, for example, inorganic particles, a binder, or a combination thereof.

[Evaluation of degree of smeared foreign matter]

After the cardboard test, the surface of the cardboard was photographed with an optical camera and imaged, and an area of the smeared foreign matter was measured. Specifically, an indirect lighting was installed with an LED lamp in the visible light range having a 60° slope, and the cardboard was photographed with a 640 M pixel optical camera at a height of 40 cm from the sample (cardboard). The photographed cardboard image was loaded with an Image J program, only an area through which the separator and the rubber pad were passed was selected and cut using a crop function, an image file format of the cut area was converted into an 8-bit image, and a Sharpen filter was applied to the image to adjust the brightness and the contrast of the image so that it is easy to distinguish between the cardboard and white foreign matter. A threshold was applied to the image to convert it into a binary image, an Analyze Particles function was executed to calculate a ratio of an area occupied by white foreign matter to the total area, and adhesive strength was evaluated based on the following criteria:

A: < 1.5%
B: 1.5% - 5%
C: > 5%

**5) Electrode fusion strength**

A positive electrode and a negative electrode were manufactured as follows, and fusion strength between the electrode and the composite separator was evaluated.

94 wt% of $LiCoO_2$ as a positive active material, 2.5 wt% of polyvinylidene fluoride as an adhesive, and 3.5 wt% of carbon black as a conductive agent were added to N-methyl-2-pyrrolidone (NMP) as a solvent, and stirring was performed to prepare a uniform positive electrode slurry. An aluminum foil having a thickness of 30 $\mu$m was coated with the slurry, dried at a temperature of 120°C, and pressed to manufacture a positive electrode plate having a thickness of 150 $\mu$m.

95 wt% of artificial graphite as the negative active material, 3 wt% of acrylic latex having Tg of -52°C (product name: BM900B, solid content: 20 wt%) as an adhesive, and 2 wt% of carboxymethyl cellulose (CMC) as a thickener were added to water as the solvent, and stirred, thereby preparing uniform negative electrode slurry. A copper foil having a thickness of 20 $\mu$m was coated with the slurry, dried at a temperature of 120°C, and pressed to manufacture a negative electrode plate having a thickness of 150 $\mu$m.

A composite separator was laminated between 4 sheets of the positive electrode (negative electrode) manufactured above, and pressing was performed at 90°C and 1 MPa for 30 seconds using a heat press machine to prepare each fusion strength evaluation sample for the positive electrode and the negative electrode. When the sample was lifted vertically, the number of attached electrodes was counted, and the fusion strength between the composite separator and each of the positive electrode and the negative electrode was evaluated based on the following criteria:

1/4: 1 out of 4 sheets of electrode was fused.
2/4: 2 out of 4 sheets of electrode were fused.
3/4: 3 out of 4 sheets of electrode were fused.
4/4: 4 out of 4 sheets of electrode were all fused.

**6) Anti-blocking performance**

Two sheets of the composite separators were placed so that they faced the coating layer, respectively, pressing was performed at a temperature of 25°C and a pressure of 15 kgf/cm$^2$ for an hour, the separators were peeled off at 180° in accordance with ASTM D903, and then it was confirmed whether organic particles and/or inorganic particles were desorbed, through scanning electron microscope (SEM). 10 random positions were specified, the number of desorbed organic particles and/or inorganic particles per unit area was counted, the average value of 10 points was derived, and the anti-blocking performance was evaluated by the following criteria (FIG. 2).

∘: Neither the organic particles nor the inorganic particles were desorbed, or less than $10^{-4}/\mu m^2$ of particles were desorbed.

✕: $10^{-4}/\mu m^2$ or more of the organic particles or the inorganic particles were desorbed.

**[Example 1]**

2 parts by weight of 1,2-benzisothiazolin-3-one (DIO2) as a dispersing agent was mixed with 100 parts by weight of boehmite having Dv50 of 0.3 $\mu$m in water to prepare a slurry having a solid content of 45 wt%. Polyacrylamide (PAAm, Mw 200,000 g/mol, Sigma Aldrich) and carboxymethyl cellulose (CMC, degree of substitution: 0.9, weight average molecular weight: 200,000 g/mol) as a binder were added to the slurry prepared above, and a polystyrene-polybutyl methacrylate-polymethyl methacrylate (PS-PBMA-PMMA) block copolymer (Dv50: 2.5 $\mu$m, Tg: 62°C) as organic particles was added to satisfy the boehmite /PAAm/CMC/PS-PBMA-PMMA = 96/2/0.8/1.2 (weight ratio), thereby preparing a composition for forming a coating layer.

Both surfaces of a polyethylene film substrate having a thickness of 9 $\mu$m (porosity: 35%-45%, SKIET) were subjected to a corona discharge treatment (power density: 2 W/m$^2$) to introduce one or more surface polar groups, and the corona surface treatment at this time was performed at a speed of 5 mpm (meter per minute). The composition for forming a coating layer was applied on both surfaces of the polyethylene film substrate which was surface-treated with corona by a wire bar coating method, and was dried for 5 minutes in a 50°C drying furnace under the driving conditions of 5 meter per minute (mpm) to manufacture a composite separator having coating layers having the same thickness formed on both surfaces.

**[Example 2]**

The process was performed in the same manner as in Example 1, except that boehmite/PAAm/CMC/PS-PBMA-PMMA = 96/2/0.3/1.7 (weight ratio) was used.

**[Example 3]**

The process was performed in the same manner as in Example 1, except that boehmite/PAAm/CMC/PS-PBMA-PMMA = 96/1.8/0.3/1.9 (weight ratio) was used, and the thickness of the coating layer was changed as shown in the following Table 1.

**[Example 4]**

The process was performed in the same manner as in Example 1, except that PS-PBMA-PMMA (Dv50: 5.0 μm, Tg: 62°C) was used as the organic particles and PAAm used alone as the binder with boehmite/PAAm/PS-PBMA-PMMA = 96/2.8/1.2 (weight ratio) was used, and the thickness of the coating layer was changed as shown in the following Table 1.

**[Example 5]**

The process was performed in the same manner as in Example 1, except that the corona discharge treatment was not performed on the polyethylene film substrate.

**[Comparative Example 1]**

The process was performed in the same manner as in Example 1, except that boehmite/PAAm/CMC/PS-PBMA-PMMA = 97/0.7/0.3/2 (weight ratio) was used, and the thickness of the coating layer was changed as shown in the following Table 1.

**[Comparative Example 2]**

The process was performed in the same manner as in Example 1, except that boehmite/PAAm/CMC/PS-PBMA-PMMA = 94/3/2/1 (weight ratio) was used.

**[Comparative Example 3]**

The process was performed in the same manner as in Example 1, except that PS-PBMA-PMMA (Dv50: 3.0 μm, Tg: 62 °C) was used as the organic particles, boehmite/PAAm/CMC/PS-PBMA-PMMA = 92.2/3/2.8/2 (weight ratio) was used, and the thickness of the coating layer was changed as shown in the following Table 1.

**[Comparative Example 4]**

The process was performed in the same manner as in Example 1, except that PS-PBMA-PMMA (Dv50: 5.0 μm, Tg: 62 °C) was used as the organic particles and PAAm was used alone as the binder with boehmite/PAAm/PS-PBMA-PMMA = 95/3/2 (weight ratio), and the thickness of the coating layer was changed as shown in the following Table 1.

Batteries were assembled using the composite separators obtained in the examples and the comparative examples, the physical properties were measured by the methods described in the [Method for measuring physical properties] above, and the values obtained by calculating the value of the following Equation 1 and rounding down the first decimal place after the decimal point are shown in the following Table 1.

[Equation 1]

$$(A \times D^2)/T$$

wherein A is the number of the organic particles per unit area on the surface of the coating layer; D is an average particle diameter ($\mu$m) of the organic particles on the surface of the coating layer; and T is the total thickness ($\mu$m) of the coating layer.

[Table 1]

|  |  | Example | | | | | Comparative Example | | | |
|---|---|---|---|---|---|---|---|---|---|---|
|  |  | 1 | 2 | 3 | 4 | 5 | 1 | 2 | 3 | 4 |
| D ($\mu$m) | | 2.5 | 2.5 | 2.5 | 5.0 | 2.5 | 2.5 | 2.5 | 3.0 | 5.0 |
| Dv50 ($\mu$m) | | 2.5 | 2.5 | 2.5 | 5.0 | 2.5 | 2.5 | 2.5 | 3.0 | 5.0 |
| T ($\mu$m) | | 2 | 2 | 3 | 4 | 2 | 3 | 2 | 3.8 | 4.8 |
| A (/mm$^2$) | | 1,364 | 1,503 | 2,581 | 768 | 1,359 | 2,800 | 1,075 | 2,800 | 1,500 |
| Equation 1 | | 4,262 | 4,696 | 5,377 | 4,800 | 4,246 | 5,833 | 3,359 | 6, 631 | 7,812 |
| Adhesive strength | | A | A | A | A | B | A | A | A | A |
| Anti-blocking | | O | O | O | O | O | X | O | X | X |
| Electrode fusion strength | Positive electrode | 4/4 | 4/4 | 4/4 | 4/4 | 4/4 | 4/4 | 2/4 | 4/4 | 4/4 |
| | Negative electrode | 4/4 | 4/4 | 4/4 | 4/4 | 4/4 | 4/4 | 1/4 | 4/4 | 4/4 |

Referring to Table 1, it was found that the composite separator according to an exemplary embodiment of the present invention may satisfy both excellent electrode fusion strength and anti-blocking performance even at a small thickness of the coating layer. In addition, it was found that the composite separator according to an exemplary embodiment had excellent adhesive strength between the inorganic particles in the coating layer as well as the adhesive strength between the interfaces of the substrate and the coating layer, and may effectively suppress a heat shrinkage phenomenon. In addition, the electrochemical device employing the composite separator according to an exemplary embodiment may secure heat resistance and safety and may be favorable for having higher capacity and higher output. In addition, it was confirmed that Example 1 using a mixed binder of PAAm and CMC had better air permeability properties. Specifically, when the air permeability was measured according to ASTM D726, the air permeability of the separator according to Example 1 was 165 s/100 cc, while the air permeability of the separator according to Example 4, which used PAAm alone, was measured to be 180 s/100 cc.

However, it was confirmed that the composite separators according to the comparative examples had a desorption phenomenon of the organic particles and/or the inorganic particles during winding even with the electrode fusion strength being secured (FIG. 2), and when the desorption phenomenon was prevented, the electrode fusion strength was not secured.

The composite separator of the present disclosure may be widely applied to a green technology field such as electric vehicles, battery charging stations, and other solar power generations and wind power generations using batteries. In addition, the separator of the present disclosure may be used in eco-friendly electric vehicles, hybrid vehicles, and other renewable energy driven vehicles for preventing climate change by suppressing air pollution and greenhouse gas emissions.

When a composite separator according to an embodiment that includes a porous substrate, and a coating layer including organic particles on the substrate, is provided in a battery cell, sufficient fusion strength with an electrode, reduced internal resistance, and improved electrochemical performance may be achieved.

In addition, the composite separator according to an embodiment may have excellent heat resistance and adhesive strength even at a small thickness and may effectively suppress a shrinkage phenomenon at a high temperature.

In addition, the composite separator according to an embodiment may suppress a desorption phenomenon and a blocking phenomenon of organic particles and/or inorganic particles during separator winding (e.g., during battery manufacturing).

In addition, the composite separator according to an embodiment can be conveniently manufactured in high yields while ensuring reproducibility of properties, and is thus applicable to industrial commercialization, and an electrochemical device employing the composite separator according to an embodiment may satisfy safety requirements and standards and simultaneously achieve high capacity and output characteristics.

Hereinabove, although the present disclosure has been described by the specific matters and limited exemplary embodiments in the present disclosure, they have been provided only for assisting the entire understanding of the present disclosure, and the present disclosure is not limited to the exemplary embodiments, and various modifications and changes may be made by those skilled in the art to which the present disclosure pertains from the description.

Therefore, the present disclosure is not limited to the above-described exemplary embodiments, and the following claims as well as all modifications equal or equivalent to the claims are intended to fall within the scope of the disclosure.

## Claims

1.  A composite separator comprising: a porous substrate; and a coating layer which is formed on at least one surface of the substrate and includes organic particles,

    wherein the coating layer satisfies the following Equation 1:

    $$[\text{Equation 1}]$$

    $$4{,}000 \leq (A \times D^2)/T \leq 5{,}500$$

    wherein

    A is the number of the organic particles per unit area ($/mm^2$) on a surface of the coating layer;
    D is an average particle diameter ($\mu m$) of the organic particles observed on the surface of the coating layer; and
    T is a total thickness ($\mu m$) of the coating layer.

2.  The composite separator of claim 1, wherein the average particle diameter (D) of the organic particles on the surface of the coating layer is 1 $\mu m$ to 10 $\mu m$, and/or
    wherein the organic particles have a glass transition temperature ($T_g$) of 40°C to 80°C.

3.  The composite separator of claim 1 or 2, wherein the total thickness of the coating layer is 0.1 $\mu m$ to 20 $\mu m$, preferably 1 $\mu m$ to 10 $\mu m$, more preferably 1 $\mu m$ to 5 um, and even more preferably more than 1 $\mu m$ and less than 5 $\mu m$.

4.  The composite separator of one of claims 1 to 3, wherein the organic particles include one or two or more selected from the group consisting of acryl-based polymers, urethane-based polymers, and fluorine-based polymers.

5.  The composite separator of claim 4, wherein the acryl-based polymer includes a copolymer including an alkyl (meth) acrylatebased monomer polymerization unit; and one or two or more polymerization units selected from a styrene-based monomer polymerization unit, a butadiene-based monomer polymerization unit, and a vinyl-based monomer polymerization unit.

6.  The composite separator of one of claims 1 to 5, wherein the coating layer further includes inorganic particles and a binder,
    preferably wherein the inorganic particles are included at 96 to 99 wt% with respect to a total weight of the coating layer.

7.  The composite separator of claim 6, wherein the binder and the organic particles are included at a weight ratio of 5:5 to 7:3, and/or
    wherein the organic particles are included in a range of more than 1 wt% and 2 wt% or less with respect to the total weight of the coating layer.

8.  The composite separator of claim 6 or 7, wherein the inorganic particles have an equivalent spherical diameter (Dv50) of 0.01 $\mu m$ to 1 $\mu m$,
    preferably wherein the inorganic particles include one or two or more selected from the group consisting of boehmite, pseudo-boehmite, $BaSO_4$, $CeO_2$, MgO, CaO, ZnO, $Al_2O_3$, $SiO_2$, $TiO_2$, $BaTiO_3$, $HfO_2$, $SrTiO_3$, $SnO_2$, NiO, $ZrO_2$, $Y_2O_3$, and SiC.

9. The composite separator of one of claims 1 to 8, wherein the binder includes one or two or more selected from (meth) acryl-based polymers, fluorine-based polymers, styrene-based polymers, vinyl alcohol-based polymers, vinyl ester-based polymers, vinylpyrrolidone-based polymers, cellulose-based polymers, polyimide-based polymers, polyamide-based polymers, and polyalkylene glycol,
preferably wherein the binder includes polyacrylamide and/or carboxymethyl cellulose.

10. The composite separator of claim 9, wherein the binder includes carboxymethyl cellulose having a weight average molecular weight of 180,000 g/mol or more and a degree of substitution of 0.6 to 1.2.

11. The composite separator of one of claims 1 to 10, wherein the porous substrate is hydrophilically surface-treated, preferably corona discharge surface-treated.

12. The composite separator of one of claims 1 to 11, wherein the composite separator has the following anti-blocking performance:

[anti-blocking performance]
two sheets of the composite separators were placed so that they faced the coating layer, respectively, pressing was performed at a temperature of 25°C and a pressure of 15 kgf/cm$^2$ for an hour, the separators were peeled off at 180° in accordance with ASTM D903, and it was confirmed whether organic particles and/or inorganic particles were desorbed, through scanning electron microscope (SEM); and 10 random positions were specified, the number of desorbed organic particles and/or inorganic particles per unit area was counted, and as a result of deriving an average value of 10 points, the value was less than $10^{-4}/\mu m^2$, or neither organic particles nor inorganic particles were desorbed.

13. The composite separator of one of claims 1 to 12, wherein, when the composite separator is subjected to a cardboard test and a degree of foreign matter smeared on a surface of a cardboard is evaluated, a ratio of an area occupied by the smeared foreign matter to an area of the cardboard is 5% or less:

[cardboard test]
a black cardboard and a rubber pad having a size of 2 cm × 10 cm are sequentially placed on a coating layer of a composite separator specimen having a size of 5 cm × 10 cm, the cardboard is pulled out horizontally at a speed of 0.1 m/s while a force of 10 N is applied to the rubber pad using a pressing device, and a degree of foreign matter smeared on the surface of the cardboard is tested.

14. A method for manufacturing a composite separator, comprising:

applying a composition for forming a coating layer including organic particles on at least one surface of a porous substrate; and
drying the composition to form a coating layer, the coating layer being configured to satisfy the following Equation 1:

$$[\text{Equation 1}]$$

$$4{,}000 \leq (A \times D2)/T \leq 5{,}500$$

wherein

A is the number of the organic particles per unit area (/mm2) on a surface of the coating layer;
D is an average particle diameter ($\mu$m) of the organic particles observed on the surface of the coating layer; and
T is a total thickness ($\mu$m) of the coating layer, preferably wherein the drying is performed by drying by warm air, hot air, or low-humidity air, vacuum drying, or irradiation with far infrared rays, and/or electron beam-induced radiation, and/or
wherein a drying time is 30 seconds to 500 seconds.

15. An electrochemical device comprising a positive electrode, a negative electrode, and a composite separator,

wherein the composite separator includes a porous substrate and a coating layer which is formed on at least one surface of the substrate and includes organic particles, and
the coating layer satisfies the following Equation 1:

$$[\text{Equation 1}]$$

$$4{,}000 \leq (A \times D^2)/T \leq 5{,}500$$

wherein

A is the number of the organic particles per unit area ($/mm^2$) on a surface of the coating layer;
D is an average particle diameter ($\mu m$) of the organic particles observed on the surface of the coating layer;
and T is a total thickness ($\mu m$) of the coating layer.

FIG. 1

FIG. 2

FIG. 3

FIG. 4

FIG. 5

| | Europäisches Patentamt European Patent Office Office européen des brevets | **EUROPEAN SEARCH REPORT** | **Application Number** EP 25 21 2615 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 439 843 A1 (LG ENERGY SOLUTION LTD [KR]) 2 October 2024 (2024-10-02) * examples 1,2 * ----- | 1-15 | INV. H01M50/449 H01M50/403 H01M50/42 |
| X | CN 116 895 906 A (SK ENERGY CO LTD; SK IE TECH CO LTD) 17 October 2023 (2023-10-17) * examples 1-5 * ----- | 1-15 | H01M50/423 H01M50/429 H01M50/431 H01M50/443 |
| X | EP 4 156 340 A1 (ASAHI CHEMICAL IND [JP]) 29 March 2023 (2023-03-29) * examples 1-28 * ----- | 1,3-15 | H01M50/446 H01M50/46 H01M50/489 |
| A | | 2 | |

TECHNICAL FIELDS
SEARCHED (IPC)

H01M

The present search report has been drawn up for all claims

| Place of search | Date of completion of the search | Examiner |
|---|---|---|
| Munich | 17 February 2026 | Götz, Heide |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

....................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 2615

This annex lists the patent family members relating to the patent documents cited in the above-mentioned European search report.
The members are as contained in the European Patent Office EDP file on
The European Patent Office is in no way liable for these particulars which are merely given for the purpose of information.

17-02-2026

| Patent document cited in search report | | Publication date | Patent family member(s) | | Publication date |
|---|---|---|---|---|---|
| EP 4439843 | A1 | 02-10-2024 | CN | 118318344 A | 09-07-2024 |
| | | | EP | 4439843 A1 | 02-10-2024 |
| | | | JP | 2024540498 A | 31-10-2024 |
| | | | KR | 20230122467 A | 22-08-2023 |
| | | | US | 2025105444 A1 | 27-03-2025 |
| | | | WO | 2023153657 A1 | 17-08-2023 |
| CN 116895906 | A | 17-10-2023 | NONE | | |
| EP 4156340 | A1 | 29-03-2023 | CN | 115668629 A | 31-01-2023 |
| | | | EP | 4156340 A1 | 29-03-2023 |
| | | | JP | 7305895 B2 | 10-07-2023 |
| | | | JP | WO2022186257 A1 | 09-09-2022 |
| | | | KR | 20220167311 A | 20-12-2022 |
| | | | TW | 202245325 A | 16-11-2022 |
| | | | US | 2024234959 A1 | 11-07-2024 |
| | | | WO | 2022186257 A1 | 09-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 102573567 B1